**Europäisches Patentamt**

**European Patent Office**

**Office européen des brevets**

(11) Veröffentlichungsnummer : **0 376 033 B1**

# (12) EUROPÄISCHE PATENTSCHRIFT

(45) Veröffentlichungstag der Patentschrift :
20.01.93 Patentblatt 93/03

(51) Int. Cl.⁵ : **C09C 1/24, G11B 5/706**

(21) Anmeldenummer : **89122784.5**

(22) Anmeldetag : **09.12.89**

(54) **Verfahren zur Herstellung von magnetischen Eisenoxiden und so erhaltene Pigmente.**

(30) Priorität : **24.12.88 DE 3843848**
**04.04.89 DE 3910782**

(43) Veröffentlichungstag der Anmeldung :
**04.07.90 Patentblatt 90/27**

(45) Bekanntmachung des Hinweises auf die
Patenterteilung :
**20.01.93 Patentblatt 93/03**

(84) Benannte Vertragsstaaten :
**DE FR GB**

(56) Entgegenhaltungen :
**DE-A- 3 344 299**
**DE-A- 3 631 193**
**US-A- 4 066 564**

(73) Patentinhaber : **BAYER AG**
**W-5090 Leverkusen 1 Bayerwerk (DE)**

(72) Erfinder : **Kathrein, Hendrik, Dr.**
**Gürtelweg 4**
**W-4053 Jüchen-Aldenhoven (DE)**
Erfinder : **Kiemle, Peter, Dr.**
**Bärenstrasse 53a**
**W-4150 Krefeld-Traar (DE)**

EP 0 376 033 B1

## Beschreibung

Die vorliegende Erfindung betrifft ein Verfahren zur Herstellung von magnetischen cobalthaltigen Eisenoxidpigmenten sowie die so erhältlichen Pigmente.

Gamma-$Fe_2O_3$-Magnetpigmente besitzen Koerzitivkräfte bis zu etwa 31 kA/m, Ferrit-Magnetpigmente bis zu etwa 35 kA/m. Bei Erhöhung der Speicherdichte werden zur magnetischen Signalaufzeichnung im Audio-, Video- und Datenspeicherungbereich zunehmend Magnetpigmente mit wesentlich höherer Koerzitivfeldstärke verwendet. Zur Erhöhung der Koerzitivstärke magnetischer Eisenoxide sind verschiedene Verfahren bekannt:

Gemäß der DE-A 29 03 593 erhält man höher koerzitive Pigmente aus alpha-FeOOH-Vorläuferverbindungen, die mit Cobalt dotiert sind. Dabei erreicht man durch 1 % Cobalt und einen FeO-Gehalt von 20 % eine Koerzitivfeldstärke von etwa 50 kA/m. Als nachteilig haben sich bei diesen Pigmenten die niedrige Kopierdämpfung, die ungenügende magnetische Stabilität und die hohe Temperaturabhängigkeit der Koerzitivkraft erwiesen.

Ein anderer Weg, zu hohen Koerzitivfeldstärken zu gelangen, ist in der DE-A 22 35 383 beschrieben. Dabei läßt man auf einen Kern aus magnetischem Eisenoxid in stark alkalischem Milieu eine Schicht von Cobaltferrit epitaktisch aufkristallisieren Diese Pigmente zeigen gegenüber den cobaltdotierten Pigmenten bessere Werte der Kopierdämpfung und magnetischen Stabilität, lassen jedoch hinsichtlich der Schaltfeltverteilung und der in Bändern erreichbaren Langzeit-Löschdämpfungseigenschaften zu wünschen übrig.

Verfahren zur Herstellung von magnetischen Eisenoxidpigmenten mit besseren magnetostatischen Eigenschaften sind in den DE-A 20 36 612, DE-A 22 43 231, DE-A 24 10 517, DE-A 22 89 344 beschrieben. Hiebei wird jeweils auf die Oberfläche des Eisenoxid-Kernmaterials eine Cobaltverbindung, in der Regel Cobalthydroxid, aufgefällt. Durch geeignete Maßnahmen wird dann Cobalt in die oberflächenarmen Zonen des Kernmaterials eindiffundiert.

In den DE-A 35 20 210, DE-A 36 31 193 und DE-A 33 44 299 sind Verfahren beschrieben, bei denen zur Verbesserung der magnetostatischen Eigenschaften Cobalt- und Eisen-Verbindungen in mehreren Schichten getrennt auf das Eisenoxidpigment-Kernmaterial aufgefällt werden.

Obwohl durch Anwendung einiger der erwähnten Verfahren die Magnetostatik der Pigmente verbessert werden kann, weisen alle Verfahren den Nachteil auf, daß eine Kombination von hoher Koerzitivfeldstärke und guter Schaltverteilung nur durch den Einsatz einer Temperaturbehandlung oberhalb von 100° C erreicht werden kann, was sich negativ auf die magnetische Stabilität der Oxide auswirkt.

Es bestand daher die Aufgabe, ein verbessertes Verfahren zur Herstellung von magnetischen Eisenoxidpigmenten zu finden, das die oben beschriebenen Nachteile nicht aufweist.

Überraschenderweise wurde nun gefunden, daß diese Anforderungen erfüllt werden durch ein Verfahren zur Herstellung von magnetischen Eisenoxidpigmenten mit einer Beschichtung einer Cobaltverbindung, wobei das als Kernmaterial dienende magnetische Eisenoxidpigment zunächst mit einer Schicht eines Cobaltferrites der Zusammensetzung $Co_xFe^{II}_{1-x}Fe2^{III}O_4$ ($O < x \leq 1$) oder einer cobalthaltigen bertholliden Verbindung beschichtet wird, auf die anschließend eine weitere Cobaltverbindung aufgetragen wird. Dieses Verfahren ist Gegenstand der vorliegenden Erfindung.

Als magnetisches Eisenoxid-Kernmaterial können gamma-$Fe_2O_3$-, $Fe_3O_4$-Pigmente sowie bertholloide Verbindungen der Zusammensetzung $FeO_x$ ($1,33 \leq x \leq 1,5$) eingesetzt werden. Diese Eisenoxide können dabei eines oder mehrere Begleitelemente aus der Gruppe P, Zn, B, Si, Sn, Ge, Al, Mn, Cr, Ni, Mg, Ca enthalten.

Erfindungsgemäß wird die Vorbelegung mittels eines Eisen(II,III)-Salzes mit einem Fe(III)-Gehalt von O bis 67 % sowie eines Cobaltsalzes durchgeführt. Besonders bevorzugt wird die Vorbelgung in alkalischem Milieu durchgeführt. Die Beschichtung kann nach folgenden Verfahren durchgeführt werden: Eisenoxidkernmaterial wird in Wasser dispergiert, mit dem Eisensalz, dem Cobaltsalze oder deren Lösungen und einer Alkalilösung versetzt. Die Zugabe der Alkalilösung kann vor oder nach der Dispergierung-bzw. vor oder nach der Zugabe der Eisen- und Cobaltsalz-Lösung erfolgen.

Die Vorbelegung kann unter oxidierenden Bedingungen, z.B. durch Verwendung von Luft als Oxidationsmittel, durchgeführt werden, wodurch die mit der Eisensalzlösung zugegebenen Eisen(II)-Ionen ganz oder teilweise oxidiert werden. Der Prozeß kann aber auch unter inerten Bedingungen durchgeführt werden, wobei angenommen wird, daß die Oxidation der Eisen(II)-Ionen der Vorbelegungsschicht durch die Eisen(III)-Ionen des Kernmaterials erfolgt.

Vorzugsweise wird bei der Vorbelegung so lange bei Temperaturen zwischen 20°C und dem Siedepunkt gerührt, bis kein Fe(II)-Anteil mehr in der Lösung ist.

Im Anschluß an die Auftragung der Cobalt-Eisenverbindung erfolgt die Auftragung der Cobaltverbindung durch Zugabe eines Cobaltsalzes oder alkalischen Lösung zu der Pigmentsuspensian. Die Beschichtung mit Cobalt kann unter oxidierdenen oder inerten Bedingungen durchgeführt werden.

Als Cobaltverbindung ist ein Co(II)-Salz, insbesondere $CoSO_4$ x 7 $H_2O$, geeignet. Besonders gute Ergeb-

2

nisse werden erzielt, wenn die Beschichtung so durchgeführt wird, daß der Co-Gehalt in der Ober- und Vorbelegungsschicht zwischen 0,5 und 10 %, bezogen auf das eingesetzte Kernamterial, beträgt.

Die Ca-Beschichtung wird vorzugsweise im alkalischen Milieu durchgeführt. Die OH-Konzentration während der Beschichtung mit der Eisen/Cobalt- sowie der Cobaltverbindung beträgt 0,1 bis 10 Mol/l, vorzugsweise 0,3 bis 5 Mol/l.

Der Feststoffgehalt an Kernmaterial in der Suspension liegt zwischen 30 g/l und 200 g/l, vorzugsweise zwischen 50 und 150 g/l. Die in der Vorbelegungsschicht auftragene Cobaltferritmenge entspricht 2 bis 25 % des eingesetzten Kernmaterials.

Die Aufarbeitung der Pigmentsuspension erfolgt durch Filtration, Waschen und Trocknen.

Gegenstand dieser Erfindung sind auch die nach dem erfindungsgemäßen Verfahren erhältlichen Pigmente. Da diese Pigmente ohne eine Temperaturbehandlung oberhalb 100°C erhalten worden sind, sind sie durch eine gute magnetische Stabilität gekennzeichnet.

Im folgenden wird die Erfindung beispielhaft erläutert, ohne daß hierin eine Einschränkung zu sehen ist.

Die magnetischen Daten der Pulverproben wurden mit einem Probenvibrationsmagnetometer bei einem magnetischen Feld von 398 kA/m gemessen.

Zur Ermittlung der magnetostatischen Eigenschaften der erfindungsgemäßen Eisenoxidpigmente wurde das zu untersuchende Pigment in einem Lack auf PVC/PVA-Basis dispergiert und auf eine Folie aus Polyester in dünner Schicht aufgetragen. Nach Ausrichtung der Pigmente in einem homogenen Magnetfelf von 80 kA/m wurden die Testbänder bei 60°C ausgehärtet. Nach Schneiden der Bänder erfolgte mit Hilfe eines Probenvibrationsmagnetometer die Ermittlung folgender Größen:

$_iH_c$      Koerztitivfeldstärke gemessen bei 398 kA/m

Mr/ms      remente Magnetisierung/Sättigungsmagnetisierung

SFD      Schaltfelfverteilung

## Beispiel 1

480 g eines bertholloiden Eisenoxidpigments (Koerzitivfeldstärke: 33,7 kA/m, spez. Sättigungsmagnetisierung: 90 nTm³/g, spezifische Oberfläche 27 m²/g, Länge/BreiteVerhältnis 9:1, FeO-Gehalt 4,5 %) wurden in 2,4 l Wasser dispergiert und in einem 5-l-Rührbehälter bei 40°C mit einer Lösung von 181 g $FeSO_4$ x 7 $H_2O$ in 500 ml destilliertem Wasser sowie 30,5 g $CoSO_4$ x 7 $H_2O$ in 83 ml dest. Wasser versetzt, während Stickstoff in die Lösung eingeblasen wurde. Nach Zugabe von 632 Natronlauge (740 g NaOH/l) und 218 ml dest. Wasser wurde unter Stickstoff auf 80°C aufgeheizt und die Lösung 5 Stunden mit Luft begast. Im Anschluß hieran wurde eine Lösung von 61 g $CoSO_4$ in 167 ml dest. Wasser zugegeben, auf 95°C aufgeheizt und weitere 16 Stunden mit Luft begast.

Die Aufarbeitung der Suspension erfolgte durch Filtration und Waschung auf einr Laborfilterpresse und Trocknung bei 30°C im Umlufttrockenschrank. Die getrocknete Probe wurde auf eine Stampfdichte von 0,90 g/ml verdichtet und wie im Text beschrieben zum Magnetband weiterverarbeitet.

## Vergleichsbeispiel 1

480 g des in Beispiel 1 beschriebenen Eisenoxidkernmaterials wurden in 2,4 l dest. Wasser dispergiert und in einem 5-l-Rührbehälter bei 40° C mit einer Lösung von 272 g $FeSO_4$ x 7 $H_2O$ in 500 ml dest. Wasser und einer Lösung von 91,5 g $CoSO_4$ x 7 $H_2O$ in 250 ml Wasser versetzt, während Stickstoff in die Lösung eingeblasen wurde. Nach Zugabe von 842 ml Natronlauge (740 g NaOH/l) wurde unter Stickstoff auf 80° C aufgeheizt und die Lösung 6 Stunden mit Luft begast.

Die Aufarbeitun der Suspension erfolgte wie in Beispiel 1 beschrieben.

## Vergleichsbeispiel 2

480 g des in Beispiel 1 beschriebenen Eisenoxidpigments wurden in 2,4 l dest. Wasser dispergiert und in einem 5-l-Rührbehälter bei 40°C mit einer Lösung von 181 g $FeSO_4$ x 7 $H_2O$ in 500 ml dest. Wasser versetzt, während Stickstoff in die Lösung eingeblasen wird. Nach Zugabe von 632 ml Natronlauge (741 g NaOH/l) und 218 ml dest. Wasser wurde unter Stickstoff auf 80° C aufgeheizt und die Lösung 5 Stunden mit Luft begast. Im Anschluß hieran wurde eine Lösung von 91,5 g $CoSO_4$ x 7 $H_2O$ in 250 ml dest. Wasser zugegeben auf 95° C aufgeheizt und weitere 16 Stunden begast.

Die Aufarbeitung der Suspension erfolgte wie in Beispiel 1 beschrieben.

Vergleichsbeispiel 3

480 g des in Beispiel 1 beschriebenen Eisenoxidpigmentes wurden in 2,4 l dest. Wasser dispergiert und in einem 5-l-Rührbehälter bei 40°C mit einer Lösung von 181 g $FeSO_4$ x 7 $H_2O$ in 500 ml dest. Wasser versetzt, während Stickstoff in die Lösung eingeleitet wurde. Nach Zugabe von 632 ml Natronlauge (740 g NaOH/l) und 218 ml dest. Wasser wurde unter Stickstoff 5 Minuten gerührt. Im Anschluß hieran wurde eine Lösung von 91,5 g $CoSO_4$ x 7 $H_2O$ in 250 ml dest. Wasser zugegeben, unter Stickstoffbegasung auf 80°C aufgeheizt und die Lösung 6 Stunden mit Luft begast.

Die Aufarbeitung der Suspension erfolgte wie in Beispiel 1 beschrieben.

Die in den Beispielen erläuterten Versuche zeigen, daß eine befriedigend hohe Koerzitivfeldstärke bei gleichzeitig guter Schaltfeldverteilung nur mit dem beschriebenen Verfahren erreicht werden kann. Der Einsatz einer Nachtemperung oder Trocknung bei Temperaturen oberhalb von 100°C ist nicht erforderlich, soll aber nicht ausgeschlossen werden.

Tabelle 1:

| | PULVER | | | | BAND | | |
|---|---|---|---|---|---|---|---|
| | Stopfdichte $g/cm^3$ | $_iH_c$ $kA/m$ | $Ms/\rho$ $nTm^3/g$ | $Mr/\rho$ $nTm^3/g$ | $_iH_c$ $kA/m$ | $Mr/Ms$ | SFD |
| Beispiel 1 | 1,27 | 52,0 | 95,9 | 48,1 | 55,5 | 0,87 | 0,47 |
| Vergleichsbeispiel 1 | 1,26 | 45,4 | 92,7 | 46,0 | 52,7 | 0,85 | 0,61 |
| Vergleichsbeispiel 2 | 1,21 | 42,1 | 94,9 | 43,8 | 45,6 | 0,88 | 0,43 |
| Vergleichsbeispiel 3 | 1,13 | 48,5 | 94,9 | 47,3 | 50,7 | 0,88 | 0,49 |

EP 0 376 033 B1

# EP 0 376 033 B1

**Patentansprüche**

1. Verfahren zur Herstellung magnetischer Eisenoxidpigmente, dadurch gekennzeichnet, daß ein magnetisches Eisenoxid-Kernmaterial der Zusammensetzung $FeO_x$ mit $1,33 \leqq x \leqq 1,5$ in einem ersten Schritt mit einer Verbindung der Zusammensetzung $Co_xFe^{II}_{1-x}Fe^{III}_2O_4$ mit $0 < x \leqq 1$ oder einer cobalthaltigen bertholliden Verbindung vorbelegt und in einem zweiten Schritt mit einer Cobaltverbindung beschichtet wird.

2. Verfahren gemäß Anspruch 1, dadurch gekennzeichnet, daß die Vorbelegung mittels eines Eisen(II,III)-Salzes mit einem Fe(III)-Gehalt von 0 bis 67 % und eines Cobaltsalzes durchgeführt wird.

3. Verfahren gemäß einem der Ansprüche 1 oder 2, dadurch gekennzeichnet, daß die Vorbelegung unter oxidierenden oder inerten Bedingungen durchgeführt wird.

4. Verfahren gemäß Anspruch 3, dadurch gekennzeichnet, daß oxidierende Bedingungen durch Verwendung von Luft erzeugt werden.

5. Verfahren gemäß einem oder mehrerer der Ansprüche 1 bis 4, dadurch gekennezeichnet, daß die Vorbelegung im alkalischen Milieu erfolgt.

6. Verfahren gemäß einem oder mehrerer der Ansprüche 1 bis 5, dadurch gekennzeichnet, daß bei der Vorbelegung solange gerührt wird, bis kein Fe(II)-Anteil in der Lösung gefunden wird.

7. Verfahren gemäß einem oder mehrerer der Ansprüche 1 bis 8, dadurch gekennzeichnet, daß die Cobaltverbindung ein Co(II)-Salz - bevorzugt $CoSO_4 \times 7\ H_2O$ ist.

8. Verfahren gemäß einem oder mehrerer Ansprüche 1 bis 7, dadurch gekennzeichnet, daß die Beschichtung so durchgeführt wird, daß der Co-Gehalt zwischen 0,5 und 10 %, bezogen auf das eingesetzte Kernmaterial, beträgt.

9. Verfahren gemäß einem oder mehrerer der Ansprüche 1 bis 8, dadurch gekennzeichnet, daß die Beschichtung im alkalischen Milieu durchgeführt wird.

10. Magnetische Eisenoxidpigmente, erhältlich gemäß einem oder mehrerer der Ansprüche 1 bis 9.

## Claims

1. A process for the preparation of magnetic iron oxide pigments, characterised in that a magnetic iron oxide core material having the composition $FeO_x$ wherein $1.33 \leqq x \leqq 1.5$ is covered in a first step with a preliminary coating of a compound having the composition $Co_xFe^{II}_{1-x}Fe^{III}_2O_4$ wherein $0 < x \leqq 1$ or a cobalt-containing berthollide compound and is then coated in a second step with a cobalt compound.

2. A process according to Claim 1, characterised in that application of the preliminary coating is carried out using an iron(II,III) salt having an Fe(III) content of from 0 to 67% and a cobalt salt.

3. A process according to one of the Claims 1 or 2, characterised in that application of the preliminary coating is carried out under oxidizing or inert conditions.

4. A process according to Claim 3, characterised in that oxidizing conditions are produced by means of air.

5. A process according to one or more of Claims 1 to 4, characterised in that application of the preliminary coating is carried out in an alkaline medium.

6. A process according to one or more of Claims 1 to 5, characterised in that stirring is continued in the preliminary coating step until no more Fe(II) can be found in the solution.

7. A process according to one or more of Claims 1 to 8, characterised in that the cobalt compound is a Co(II) salt, preferably $CoSO_4 . 7\ H_2O$.

8. A process according to one or more of Claims 1 to 7, characterised in that coating is carried out in such a manner that the Co content is from 0.5 to 10%, based on the core material put into the process.

9. A process according to one or more of Claims 1 to 8, characterised in that coating is carried out in an alkaline medium.

10. Magnetic iron oxide pigments obtainable according to one or more of Claims 1 to 9.

**Revendications**

1. Procédé de production de pigments magnétiques d'oxyde de fer, caractérisé en ce qu'un noyau d'oxyde de fer magnétique de composition $FeO_x$ où $\underline{x}$ va d'une valeur supérieure ou égale à 1,33 à une valeur inférieure ou égale à 1,5 est préalablement recouvert, dans une première étape, d'un composé de composition $Co_xFe^{II}_{1-x}Fe^{III}_2O_4$ dans laquelle $\underline{x}$ va d'une valeur supérieure à 0 à une valeur inférieure ou égale à 1 ou d'un composé berthollide contenant du cobalt et est enduit d'un composé de cobalt dans une seconde étape.

2. Procédé suivant la revendication 1, caractérisé en ce que le revêtement préalable est effectué au moyen d'un sel de fer(II, III) ayant une teneur en Fe(III) de 0 à 67 % et d'un sel de cobalt.

3. Procédé suivant l'une des revendications 1 et 2, caractérisé en ce que le revêtement préalable est effectué dans des conditions oxydantes ou inertes.

4. Procédé suivant la revendication 3, caractérisé en ce que les conditions oxydantes sont créées par utilisation d'air.

5. Procédé suivant une ou plusieurs des revendications 1 à 4, caractérisé en ce que le revêtement préalable est effectué en milieu alcalin.

6. Procédé suivant une ou plusieurs des revendications 1 à 5, caractérisé en ce qu'on agite lors du revêtement préalable jusqu'à ce qu'on ne trouve aucune fraction de Fe(II) dans la solution.

7. Procédé suivant une ou plusieurs des revendications 1 à 6, caractérisé en ce que le composé de cobalt est un sel de Co(II), de préférence $CoSO_4$ x 7 $H_2O$.

8. Procédé suivant une ou plusieurs des revendications 1 à 7, caractérisé en ce que l'enduction est effectuée de façon telle que la teneur en cobalt s'élève entre 0,5 et 10 % par rapport au noyau utilisé.

9. Procédé suivant une ou plusieurs des revendications 1 à 8, caractérisé en ce que l'enduction est effectuée en milieu alcalin.

10. Pigments magnétiques d'oxyde de fer, obtenus conformément à une ou plusieurs des revendications 1 à 9.